# EUROPEAN PATENT SPECIFICATION

(11) **EP 2 158 732 B1**
(45) Date of publication and mention of the grant of the patent: **22.08.2018**
(21) Application number: 07748084.6
(22) Date of filing: 27.04.2007
(51) Int. Cl.: H04L 12/46, H04L 12/24, H04L 12/28, H04L 29/08, H04L 29/06

(54) **CONTROL POINT, METHOD AND COMPUTER PROGRAM, WHERE DISCOVERED AVAILABLE SERVICES AND/OR MEDIA CONTENT ARE ARRANGED TO USE A COMMON PLUG AND PLAY COMMUNICATION PROTOCOL AND THEIR PRESENTATION IS ACCESSIBLE FROM A PUBLIC AREA NETWORK**
STEUERPUNKT, VERFAHREN UND COMPUTERPROGRAMM, WOBEI ENTDECKTE DIENSTLEISTUNGEN UND / ODER MEDIENINHALTE ZUR VERWENDUNG EINES GEMEINSAMEN PLUG-PLAY-KOMMUNIKATIONSPROTOKOLLS ZUR VERFÜGUNG GESTELLT WERDEN, UND WOBEI EINE PRÄSENTATION DER ENTDECKTEN DIENSTLEISTUNGEN UND / ODER MEDIENINHALTE AUS EINEM ÖFFENTLICHEN GEBIETSNETZ ZUGÄNGLICH IST
POINT DE COMMANDE, PROCÉDÉ ET PROGRAMME INFORMATIQUE, OÙ DES SERVICES DISPONIBLES ET / OU DES CONTENUS MULTIMÉDIAS DÉCOUVERTS SONT DISPOSÉS DE MANIÈRE À UTILISER UN PROTOCOLE COMMUN DE COMMUNICATION DE PLUG-AND-PLAY ET LEUR PRÉSENTATION EST ACCESSIBLE À PARTIR D'UN RÉSEAU DE ZONE PUBLIQUE

(43) Date of publication of application: 03.03.2010
(73) Proprietor: Telefonaktiebolaget LM Ericsson (publ), 164 83 Stockholm (SE)
(72) Inventor: JOHANSSON,Ola, S-415 03 Göteborg (SE); LUND, Hans-Åke, S-445 34 Bohus (SE)
(74) Representative: Brann AB
(86) International application number: PCT/SE2007/000419
(87) International publication number: WO 2008/133555

(56) References cited:
- WO-A1-2006/121278
- WO-A2-03/049370
- WO-A2-2007/030305
- US-A1- 2004 243 700
- US-A1- 2005 114 490
- US-A1- 2005 138 193
- US-A1- 2007 004 436

## Description

### TECHNICAL FIELD

The present invention relates to a solution for a universal plug and play (UPnP) control point and in particular for extending an UPnP control point with a web server.

### BACKGROUND OF THE INVENTION

Universal Plug and Play (UPnP) is gaining popularity among vendors of consumer electronics, computing, home automation, home security, appliances, printing, photography, computer networking, and mobile products.

UPnP is developed by the UPnP Forum for the sake of creating plug and play home networks where devices can be added or removed without manual network configuration. An UPnP enabled device is able to inform others of its capabilities and learn others capabilities, allowing one device to use the functionality of other devices. In an UPnP network there are Control Points and devices of various types. Control Points can locate and control devices on the network. A number of typical devices such as media server, media renderer, Internet gateway, printer and digital security camera have been standardized by the forum. For example, a control point might be a remote control that can set up a video stream from a DVD (media server) to a display (media renderer).

Another trend in consumer electronics is to facilitate access to content stored on and devices connected to the home network available also over the Internet. This is commonly referred to as place shifting. Today there exist a number of commercially available solutions, either in the form of software running on a PC (e.g. Orb or SoonR) or special purpose appliances (Sony LocationFree or SlingBox). A regular web browser is often used to retrieve the content when accessing over the Internet, but in some cases software special to the particular vendor needs to be installed on the external device that is used to access home content. A server on the Internet is used to maintain information about users and capabilities of used external devices.

UPnP provides ease of use and installation, but the use of it is limited to within a LAN segment.

Place shifting solutions such as the abovementioned are often not general in their nature but focus on specific and the most common applications such as access to files, streaming of media or access to Microsoft Outlook®. All these place shifting solutions require interaction between a web server hosted by the particular vendor, the place shifting device in the home network and the external device. This limits the amount of control over the service an Internet Service Provider or operator can impose and, since the connection often is encrypted, makes it hard if not impossible to make any guarantees of the quality of the service.

In some of the currently available solutions special software needs to be installed on the external device.

US 2004/243700 discloses a computing device which is equipped with file system services and media related services that automatically make visible to a user of the computing device, through an user interface of the file system, availability of media contents, on discovery of the availability of the media contents from one or more UPNP media servers. The file system services and the media related services are further equipped to cause a selected one of the media contents to be rendered by an appropriate one of UPNP media renders, in response to a request to "render" the selected one of the media contents. The file system services and the media related services may also facilitate removal of discovered media contents as well as addition of media contents to a media server.

It is the object of the present invention to remedy at least some of these drawbacks of existing solutions.

### SUMMARY OF THE INVENTION

The basic principle of this invention is to combine an UPnP control point with a web server that is made available over the Internet. This combined device is subsequently referred to as the UPnP extender. Devices connected to the LAN and their associated services are learnt using the UPnP protocol and presented on the UPnP extender. In this way the usability of UPnP is extended beyond the reach of the home LAN and to external devices that are not UPnP enabled since standard protocols like HTTP are used.

An UPnP control point within the UPnP extender learns about all UPnP enabled devices either by discovering all types of devices or only the types of the devices of interest. Content or services are identified and subsequently published on a web page. This web page is made accessible from an external network, e.g. the Internet. When a user is requesting any content or services via the web page, the type of terminal used is identified and the correct media format, e.g. a low bit rate encoded video stream for a mobile phone, is requested from the UPnP control point extender to internal services and transported to the terminal.

The present invention gives a solution to how devices and content maintained within a home LAN can be accesses from outside the home. In particular the following advantages can be identified:
- General solution. Where other place shifting solutions specialize in one type or a few types of services this solution can be made applicable to any type of device specified by UPnP Forum. When new types are specified these can be easily added to the solution through a software upgrade.
- Standard technology (HTTP) is used to provide access to the home, meaning that access is possible from any location and virtually any networked device.

When combined with a home VPN concept, this solution will also provide an ISP or operator with full control over the service.
The present invention is realized in a number of different aspects in which a first is provided: a control point for a network architecture, the control point having an ability for automatically detecting a connected device, the control point comprising an extender function and a user interface offering access to services obtainable from the extender in a local area network, and being characterized in that the extender comprises means for discovering available services and/or media content, where the discovered available services and/or available media content are arranged to use a common plug and play communication protocol, means to acquire information on the discovered available services and/or media content in a local area network, an interface for providing a communication interface between the local area network and a public area network, means for presenting the discovered available services and/or media content, where said presented available services and/or media content is accessible from the public area network, means for receiving, from a user device of a user connecting from the public area network, selection of an available service and/or media content from the presented services and/or media content using the user interface, and means for determining a content format for the selected service and/or media content by analysing a configuration of the user device.

The control point may further comprise means for discovering available services and available media content, where said means are arranged to use a common plug and play communication protocol.

The control point may further comprise means for determining optimal media content format by analysing configuration of a user device connecting from the public area network and comprising means for requesting media content in the determined media format from a media content storage facility in the local area network.

The control point may even further comprise a transport server arranged to change a media format supplied from a media content storage facility to a media format suitable for transport to the public area network. The user interface may use at least one of Hyper Text Transfer Protocol, i.e. HTTP, Hyper Text Transfer Protocol over secure socket layer, i.e. HTTPS, and File Transfer Protocol, i.e. FTP.

The control point may further comprise means for being located at the local area network or means for being located at a service provider part of a network.

The automatically detectable device may be a universal plug and play, UPnP device.

Another aspect of the present invention, a method of providing access to local services and/or data content in a local area network from a public area network is provided, comprising the steps of: in a control point device for automatically detecting a connected device discovering available services and/or data content in the local area network; presenting available services/data content in a graphical display accessible from the public area network; authenticating access to the graphical display; and providing access to available services/data content using the control point device, receiving, from a user device of a user connecting from the public area network, selection of an available service and/or data content using the graphical display; and determining content format for the selected service and/or data content by analysing configuration of the user device.

Yet another aspect of the present invention, a computer program stored in a computer readable medium for execution on a universal plug and play, UpnP, control point, for offering available services on a home network towards an external network is provided, comprising instruction sets for: detecting available devices supporting UPnP services on the home network; communicating with the devices to obtain available services and available data content; producing a user interface displaying available services and data content on an interface accessible from an external network; and based on a configuration of a user device connecting from the external network, providing an optimized format of data to be sent to the user device from the home network.

The computer program may further comprise an instruction set for authenticating access to the user interface display.

The computer program may further comprise an instruction set for providing an optimized format of data to be sent from the home network to the external network.

Alternatively, a method of providing access to a universal plug and play extender service could comprise the steps of:
allowing a user access to a first user interface in a web server in the universal plug and play extender device according to claim 1 in a network using a graphical user interface in a format transferable using a network communication protocol; authenticating the user using the user interface;
presenting services and/or data content available in a local area network connected to the universal plug and play extender service;
allowing access to the services presented; charging the user for the access.

### BRIEF DESCRIPTION OF THE DRAWINGS

In the following, the invention will be described in a non-limiting way and in more detail with reference to exemplary embodiments illustrated in the enclosed drawings, in which:
- Fig. 1: schematically illustrates a network according to the present invention;
- Fig. 2: schematically illustrates in a block diagram a device according to the present invention;
- Fig. 3: schematically illustrates in a block diagram a method according to the present invention; and
- Fig. 4: illustrates schematically another embodiment of the present invention.

### DETAILED DESCRIPTION OF PREFERRED EMBODIMENTS

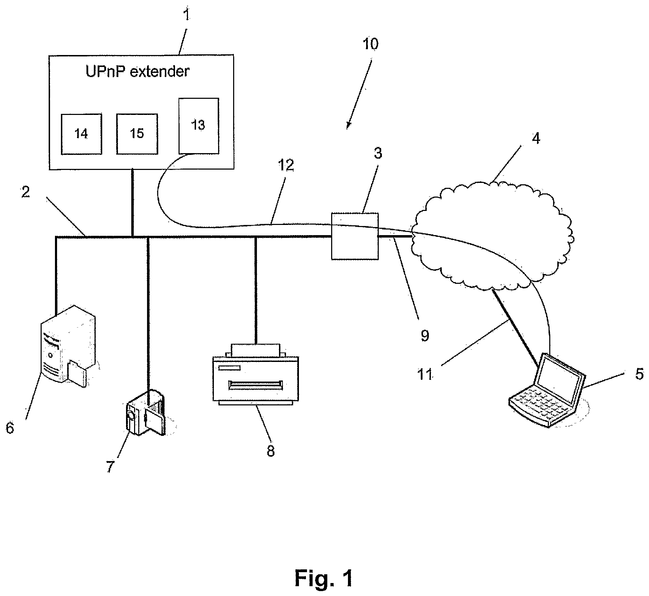

In Fig. 1 reference numeral 1 generally denote an UPnP extender according to the present invention. The extender 1 is connected to a home local area network (LAN) 2 to which also other devices may be connected, for instance but not limited to, a media server 6, a security camera 7, web camera, or a printer 8; other devices (not shown) may be connected to the same home LAN as well, including data storage equipment, data management equipment (e.g. a database managing local information or look up information), control of equipment connected to the network (e.g. control of light, heating or other electrical appliances). The home LAN 2 in turn may be connected to a gateway device 3 for connection 9 to a network (e.g. an external network such as the Internet (via service provider network) 4. The gateway device 3 may for instance be an ADSL broadband modem or similar communication device. A user device 5 may in turn be connected 11 to the network 4 for obtaining content or services from the home LAN 2 to the user device 5. The extender 1 may be provided with a web server 13 for convenient access interface for users connecting to the extender 1. The extender is preferably provided with an UPnP control Point 14. The extender may also be provided with an UPnP transport proxy 15. The user device 5 may connect to the extender using a secure communication protocol, for instance a secure socket layer such as an SSL protocol (e.g. https) or an internet protocol security protocol, for instance IPSec (which is widely used in virtual private network, VPN, setups). The connection from the user device 5 to the extender 1 may further be secured using an authentication procedure in order to secure the identity of the user.

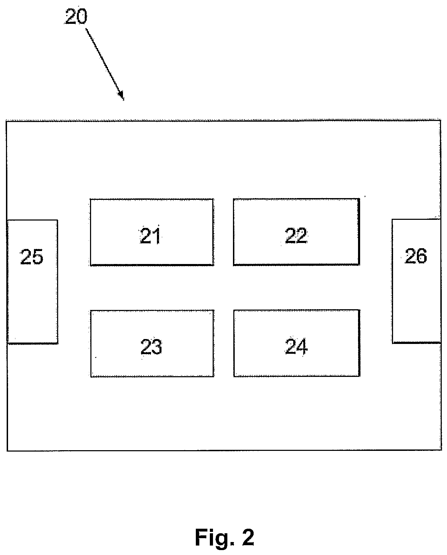

Fig. 2 illustrates an UPnP device 20 according to the present invention, comprising a processing unit 21 for operating instructions sets (in the form of software instruction sets or hardware programmed instructions). The device may further comprise at least one memory unit 22 (volatile and/or non-volatile, e.g. RAM, hard disk, flash memory or similar devices) for storing information relating to communication, connected devices, services available, user information, authentication information, network configuration data, and/or other information of interest for providing appropriate functionality. Furthermore, the device may comprise communication interfaces: one interface 25 for communicating downstream towards the home network and one interface 26 communicating upstream towards external network(s). However, it should be understood that these interfaces may operate on the same physical network communication interface and may in that case be seen as a logical interpretation of the network configuration setup. The device 20 may further comprise a user administration interface 23 for interfacing with a user administering and configurating the system (the device may also be administered through any of the communication interfaces, for instance through a web enabled interface). The user may for instance choose which services and data that should be available through the web server.

The invention may be realized as software stored in a computer readable memory unit as shown above.

The operation of the invention will now be discussed in further detail below.

First, the UPnP control point is arranged to discover all devices connected to the home network or at least the devices of the types that are deemed interesting to provide over-the-web access to. This may be done by using the standardized UPnP methods of multicasting HTTP over UDP (HTTPMU) and the Simple Service Discovery Protocol (SSDP). When a device is discovered the UPnP control point retrieves the description of the device, each device holds a description of it in an appropriate protocol, e.g. using extended markup language (XML) or some other relevant protocol capable of providing information about devices.

The UPnP control point registers the UPnP services that are available and if there are services that match the list of interesting services maintained these are published on the web server. The services and the content provided may be sorted by either what type of device provides it (e.g. security camera) or by type of content (music, movies, etc). When a terminal logs in to the UPnP extender the type of terminal is identified through matching the received browser and operating system identification included in HTTP requests with a list of devices types and corresponding browser and OS. The matching type is stored for this session and is subsequently used when content is requested. When a request for e.g. a movie to be streamed to the external device the UPnP extender request it in the format that is most suited for the particular external device. This is useful for instance in order to provide suitable format of data depending on the type of display (e.g. resolution, size, and color) used in the user device connecting from the external network, type of processing power available in the user device, type and quality of connection (e.g. high speed or low speed connection 11 between the user device 5 and the infrastructure network 4). For instance, with reference to the streaming movie example given above, the extender may provide that the movie is streamed with appropriate bandwidth requirement and with suitable codec (e.g. suitable video coding: Mpeg 1 - 4 or higher with different implementations of these).

The UPnP may further be equipped with an UPnP transport proxy 15 that is able to change the format of the requested file or service to a file format commonly used in order to not exclude the use of a certain services to some devices.

Access to the UPnP extender from the Internet is protected through the use of SSL (HTTPS) and authentication of users in order to secure that access to content on the LAN and/or access to transported data are not given to unauthorized people or devices. It should be understood that other protocols for securing and protecting the communication may be used.

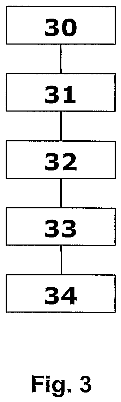

The operation of the extender may be summarized with reference to Fig. 3 illustrating the method of the operation:
30. discovering for available devices and/or services in the home network;
31. identifying services;
32. registering services on a user interface;
33. identifying and authenticating a user connecting to the UPnP services; and
34. handling communication and formatting changes between internal services towards the user located on the external network.

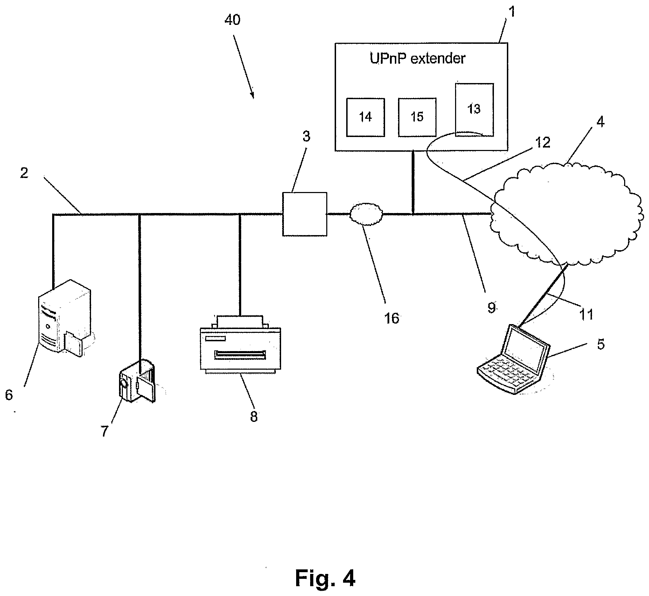

Fig. 4 shows another embodiment of the present invention, wherein the UPNP extender is located not at the premises of the user but at an operator or service provider location, wherein a transport network 16 is located in between the local area network of the user and the service provider network. However, the network configuration may be seen as the UPnP extender is part of the LAN of the user; the transport network 16 is part of the LAN from a network architectural point of view. Reference numerals indicating the same parts of the network as from Fig. 1, uses the same reference numeral.

Independently of the location of the UPnP extender; within the home premises or at a service provider location; the extender can use UPnP or any other suitable protocol towards the Internet Gateway device in order to configure it for the correct port mappings, i.e. controlling where incoming requests should be directed depending on service request by the user from an external location.

Dynamic DNS (DynDNS) may be used in any of the exemplified embodiments of the invention to simplify access to the UPnP extender. In many cases the Internet connection from the home location is done using a dynamic Internet Protocol address (DHCP connection) which means that from time to time the IP address changes of the home location, e.g. when the gateway has been disconnected physically from the connection line or on a time basis. In order to connect to the UPnP services the user need to know the IP address of the home network which may be difficult in view of a changing IP address. However, the system may be arranged to inform a central address controller of any changes in the IP address making it possible to use a single address from any external device at all times and still get access to the UPnP extender. The central address controller will act as a domain name server, DNS, for the system. There are several commercially available DynDNS services available on public networks (for instance the Internet) which may be used by the system according to the present invention. In the case when the service provider hosts the extender, an address is normally provided as a normal DNS lookup entry; however, it should not be ruled out that a DynDNS service may be used also in this case for some circumstances.

The UPnP extender is equipped with software for discovering the types of devices and services available in the LAN and to translate the findings into a web interface or similarly easily accessible user interface reachable remotely. In the user interface, the user will be able to obtain access to the different services or data content available through the UPnP services. The UPnP protocol is equipped with protocol commands to be able to acquire this type of information and to inform an UPnP controller about available services. This is in accordance with DLNA (Digital Living Network Alliance) operations.

The user connects to the UPnP extender from a public network having connection with the local area network using an address (IP address or URL) and the extender optionally authenticates the user (or user device) in order to secure the content and/or services available on the LAN. The extender has either previously determined the available services/data content or will at this connection time perform such a discovery process and presents to the user a graphical interface (e.g. in a web interface) what is available. The user can then choose what services or data content that is of interest and access this using commonly available communication protocol commands (e.g. HTTP, HTTPS, or FTP). If the user is interested in data content, for instance media content (film, music or similar), the extender acquires information about the user device as discussed above and requests the media from for instance a media server in a format suitable for transport to the user device. The extender may also comprise a transport translation function, for changing the format to a suitable format for transport.

The introduction of the UPnP extender opens new venues of business opportunities for service providers (e.g. operators of broadband network links). The service providers (SP) may provide the UPnP extender device to the end user for some kind of payment or they can provide access to an UPnP extender located outside the home of the user (e.g. at a phone connection station for a xDSL modem based link, central router/server location of the service provider, or similar locations depending on access technology). The SP may for instance provide UPnP extender services using a monthly fee, a "per access" fee (i.e. for each active connection to the extender or similar), or an information amount counting fee (e.g. per MB of transferred data or similar). This can be made using pre paid services, direct purchase via a credit card or bank account, and/or invoiced on a regular basis (time or amount basis).

It should be noted that the word "comprising" does not exclude the presence of other elements or steps than those listed and the words "a" or "an" preceding an element do not exclude the presence of a plurality of such elements. The invention can at least in part be implemented in either software or hardware. It should further be noted that any reference signs do not limit the scope of the claims, and that several "means", "devices", and "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### DEFINITIONS

- DNS: Domain Name System
- FTP: File Transfer Protocol
- HTTP: Hyper text Transfer Protocol
- HTTPS: Hyper Text Transfer Protocol over Secure Socket Layer (SSL)
- HTTPMU: HTTP over Multicast UDP
- HTTPU: HTTP over UDP
- LAN: Local Area Network
- SSDP: Simple Service Discovery Protocol
- SSL: Secure Socket Layer
- URL: Uniform Resource Locator
- UPnP: Universal Plug and Play

## Claims

1. A control point (1, 20) for a network architecture, the control point (1, 20) having an ability for automatically detecting a connected device (6, 7, 8), the control point (1, 20) comprising an extender and a user interface offering access to services obtainable from the extender in a local area network, **characterized in that** the extender comprises:
- means for discovering available services and/or media content, where the discovered available services and/or available media content are arranged to use a common plug and play communication protocol,
- means to acquire information on the discovered available services and/or media content in a local area network,
- an interface for providing a communication interface between the local area network and a public area network (4),
- means for presenting the discovered available services and/or media content, where said presented available services and/or media content is accessible from the public area network (4),
- means for receiving, from a user device (5) of a user connecting from the public area network (4), selection of an available service and/or media content from the presented services and/or media content using the user interface, and
- means for determining a content format for the selected service and/or media content by analysing a configuration of the user device (5).

2. The control point (1, 20) according to claim 1, further comprising means for requesting said service and/or media content, in the determined content format, from a content storage facility in the local area network.

3. The control point (1, 20) according to claim 1, further comprising a transport server (15) arranged to change a media format, supplied from a media content storage facility, to a media format suitable for transport to the public area network.

4. The control point (1, 20) according to claim 1, wherein the user interface uses at least one of Hyper Text Transfer Protocol, i.e. HTTP, Hyper Text Transfer Protocol over secure socket layer, i.e. HTTPS, and File Transfer Protocol, i.e. FTP.

5. The control point (1, 20) according to any of claims 1-4, further comprising means for determining the location of the control point (1, 20), wherein the determined location of the control point (1, 20) is the local area network.

6. The control point (1, 20) according to any of claims 1-4, further comprising means for determining the location of the control point (1, 20), wherein the determined location of the control point (1, 20) is a service provider part of a network.

7. The control point (1, 20) according to any of claims 1-6, wherein said connected device (6,7,8) is a universal plug and play, UPnP, device.

8. A method performed by a control point device (1, 20) for providing access to local services and/or data content in a local area network from a public area network (4), comprising the steps of:
- in the control point device (1, 20) for automatically detecting a connected device (6, 7, 8), discovering available services and/or data content in the local area network, where the discovered available services and/or data content are arranged to use a common plug and play communication protocol;
- presenting available services/data content in a graphical display accessible from the public area network (4);
- authenticating access to the graphical display;
- providing access to the available services/data content using the control point device (1, 20);
- receiving, from a user device of a user connecting from the public area network (4), selection of an available service and/or media content using the graphical display; and
- determining a content format for the selected service and/or media content by analysing a configuration of the user device.

9. A computer program adapted to be stored in a computer readable medium (22) for execution on a universal plug and play, UPnP, control point (1, 20), the UPnP control point (1, 20) being for offering available services on a home network towards an external network, the computer program comprising instruction sets for:
- detecting available devices supporting UPnP services on the home network;
- communicating with the devices to obtain available services and/or available data content, where the available services and/or available data are arranged to use a common plug and play communication protocol; and
- producing a user interface displaying the available services and/or data content on an interface accessible from an external network; and
- based on a configuration of a user device connecting from the external network, providing a preferred format of data to be sent to the user device from the home network.

10. The computer program according to claim 9, further comprising an instruction set for authenticating access to the user interface display.

## Patentansprüche

1. Steuerpunkt (1, 20) für eine Netzwerkarchitektur, wobei der Steuerpunkt (1, 20) eine Fähigkeit zum automatischen Detektieren einer verbundenen Vorrichtung (6, 7, 8) aufweist, wobei der Steuerpunkt (1, 20) eine Verlängerung und eine Benutzerschnittstelle umfasst, die einen Zugang zu Dienstleistungen bietet, die von der Verlängerung in einem lokalen Gebietsnetz erhaltbar sind, **dadurch gekennzeichnet, dass** die Verlängerung Folgendes umfasst:
- Mittel zum Entdecken von verfügbaren Dienstleistungen und/oder Medieninhalten, wobei die entdeckten verfügbaren Dienstleistungen und/oder Medieninhalte angeordnet sind, um ein gemeinsames Plug-and-Play-Kommunikationsprotokoll zu verwenden,
- Mittel zum Erhalten von Informationen zu den entdeckten verfügbaren Dienstleistungen und/oder Medieninhalten in einem lokalen Gebietsnetz,
- eine Schnittstelle zum Bereitstellen einer Kommunikationsschnittstelle zwischen dem lokalen Gebietsnetz und einem öffentlichen Gebietsnetz (4),
- Mittel zum Darstellen der entdeckten verfügbaren Dienstleistungen und/oder Medieninhalte, wobei die dargestellten verfügbaren Dienstleistungen und/oder Medieninhalte vom öffentlichen Gebietsnetz (4) zugänglich ist,
- Mittel zum Empfangen, von einer Benutzervorrichtung (5) eines Benutzers, der eine Verbindung vom öffentlichen Gebietsnetz (4) herstellt, einer Auswahl von verfügbaren Dienstleistungen und/oder Medieninhalten von den dargestellten Dienstleistungen und/oder Medieninhalten unter Verwendung der Benutzerschnittstelle, und
- Mittel zum Bestimmen eines Inhaltsformats für die ausgewählte Dienstleistung und/oder Medieninhalten durch Analysieren einer Konfiguration der Benutzervorrichtung (5).

2. Steuerpunkt (1, 20) nach Anspruch 1, ferner umfassend Mittel zum Anfordern der Dienstleistung und/oder Medieninhalte in dem bestimmten Inhaltsformat von einer Inhaltsspeichereinrichtung im lokalen Gebietsnetz.

3. Steuerpunkt (1, 20) nach Anspruch 1, ferner umfassend einen Transportserver (15), der angeordnet ist, um ein Medienformat, welches von einer Medieninhaltsspeichereinrichtung geliefert wird, in ein Medienformat, welches zum Transport zum öffentlichen Gebietsnetz geeignet ist, zu ändern.

4. Steuerpunkt (1, 20) nach Anspruch 1, wobei die Benutzerschnittstelle mindestens eines von Hyper Text Transfer Protocol, d. h. HTTP, Hyper Text Transfer Protocol über Secure Socket Layer, d. h. HTTPS, und File Transfer Protocol, d. h. FTP, verwendet.

5. Steuerpunkt (1, 20) nach einem der Ansprüche 1 - 4, ferner umfassend Mittel zum Bestimmen der Position des Steuerpunkts (1, 20), wobei die bestimmte Position des Steuerpunkts (1, 20) das lokale Gebietsnetz ist.

6. Steuerpunkt (1, 20) nach einem der Ansprüche 1 - 4, ferner umfassend Mittel zum Bestimmen der Position des Steuerpunkts (1, 20), wobei die bestimmte Position des Steuerpunkts (1, 20) ein Dienstanbieterteil eines Netzwerks ist.

7. Steuerpunkt (1, 20) nach einem der Ansprüche 1 - 6, wobei die verbundene Vorrichtung (6, 7, 8) eine universelle Plug-and-Play-, UPnP, -Vorrichtung ist.

8. Verfahren, welches von einer Steuerpunktvorrichtung (1, 20) zum Bereitstellen von Zugang zu lokalen Dienstleistungen und/oder Medieninhalten in einem lokalen Gebietsnetz von einem öffentlichen Gebietsnetz (4) durchgeführt wird, die folgenden Schritte umfassend:
- in der Steuerpunktvorrichtung (1, 20) zum automatischen Detektieren einer verbundenen Vorrichtung (6, 7, 8), Entdecken von verfügbaren Dienstleistungen und/oder Medieninhalten im lokalen Gebietsnetz, wobei die entdeckten verfügbaren Dienstleistungen und/oder Medieninhalte angeordnet sind, um ein gemeinsames Plug-and-Play-Kommunikationsprotokoll zu verwenden;
- Darstellen von verfügbaren Dienstleistungen/Dateninhalten in einer graphischen Anzeige, die vom öffentlichen Gebietsnetz (4) zugänglich ist;
- Authentifizieren des Zugangs zur graphischen Anzeige;
- Bereitstellen von Zugang zu den verfügbaren Dienstleistungen/Medieninhalten unter Verwendung der Steuerpunktvorrichtung (1, 20);
- Empfangen, von einer Benutzervorrichtung eines Benutzers, der eine Verbindung vom öffentlichen Gebietsnetz (4) herstellt, einer Auswahl einer verfügbaren Dienstleistung und/oder eines Medieninhalts unter Verwendung der graphischen Anzeige; und
- Bestimmen eines Inhaltsformats für die ausgewählte Dienstleistung und/oder den ausgewählten Medieninhalt durch Analysieren einer Konfiguration der Benutzervorrichtung.

9. Computerprogramm, das angepasst ist, um in einem computerlesbaren Medium (22) zur Ausführung eines universellen Plug-and-Play-, UPnP, -Steuerpunkts (1, 20) gespeichert zu werden, wobei der UPnP-Steuerpunkt (1, 20) zum Anbieten von verfügbaren Dienstleistungen in einem Heimnetzwerk zu einem externen Netzwerk dient, wobei das Computerprogramm Anweisungssätze für Folgendes umfasst:
- Detektieren von verfügbaren Vorrichtungen, die UPnP-Dienstleistungen im Heimnetzwerk unterstützen;
- Kommunizieren mit den Vorrichtungen, um verfügbare Dienstleistungen und/oder verfügbare Dateninhalte zu erhalten, wobei die verfügbaren Dienstleistungen und/oder verfügbaren Dateninhalte angeordnet sind, um ein gemeinsames Plug-and-Play-Kommunikationsprotokoll zu verwenden; und
- Herstellen einer Benutzerschnittstelle, die die verfügbaren Dienstleistungen und/oder Dateninhalte auf einer Schnittstelle anzeigt, die von einem externen Netzwerk zugänglich ist; und
- auf Grundlage einer Konfiguration einer Benutzervorrichtung, die eine Verbindung vom externen Netzwerk herstellt, Bereitstellen eines bevorzugten Formats von Daten, die vom Heimnetzwerk zur Benutzervorrichtung zu senden sind.

10. Computerprogramm nach Anspruch 9, ferner umfassend einen Anweisungssatz zum Authentifizieren des Zugangs zur Benutzerschnittstellenanzeige.

## Revendications

1. Point de commande (1, 20) pour une architecture réseau, le point de commande (1, 20) étant capable de détecter automatiquement un dispositif connecté (6, 7, 8), le point de commande (1, 20) comprenant un dispositif d'extension et une interface utilisateur offrant un accès à des services pouvant être obtenus auprès du dispositif d'extension dans un réseau local, **caractérisé en ce que** le dispositif d'extension comprend :
- des moyens pour découvrir des services et/ou un contenu média disponibles, où les services disponibles découverts et/ou le contenu média disponible sont agencés pour utiliser un protocole commun de communication plug-and-play,
- des moyens pour acquérir des informations sur les services et/ou le contenu média disponibles découverts dans un réseau local,
- une interface pour fournir une interface de communication entre le réseau local et un réseau public (4),
- des moyens pour présenter les services et/ou le contenu média disponibles découverts, où lesdits services et/ou contenu média disponibles présentés sont accessibles à partir du réseau public (4),
- des moyens pour recevoir, en provenance d'un dispositif utilisateur (5) d'un utilisateur se connectant à partir du réseau public (4), la sélection d'un service et/ou d'un contenu média disponible parmi les services et/ou le contenu média présentés à l'aide de l'interface utilisateur, et
- des moyens pour déterminer un format de contenu pour le service et/ou contenu média sélectionné en analysant une configuration du dispositif utilisateur (5).

2. Point de commande (1, 20) selon la revendication 1, comprenant en outre des moyens pour demander ledit service et/ou contenu média, dans le format de contenu déterminé, auprès d'une installation de stockage de contenu dans le réseau local.

3. Point de commande (1, 20) selon la revendication 1, comprenant en outre un serveur de transport (15) agencé pour modifier un format de média, fourni à partir d'une installation de stockage de contenu média, au profit d'un format de média adapté à un transport vers le réseau public.

4. Point de commande (1, 20) selon la revendication 1, dans lequel l'interface utilisateur utilise au moins un parmi un protocole de transfert hypertexte, c.-à-d. HTTP, un protocole de transfert hypertexte via connexion SSL, c.-à-d. HTTPS, et un protocole de transfert de fichiers, c.-à-d. FTP.

5. Point de commande (1, 20) selon l'une quelconque des revendications 1 à 4, comprenant en outre des moyens pour déterminer l'emplacement du point de commande (1, 20), dans lequel l'emplacement déterminé du point de commande (1, 20) est le réseau local.

6. Point de commande (1, 20) selon l'une quelconque des revendications 1 à 4, comprenant en outre des moyens pour déterminer l'emplacement du point de commande (1, 20), dans lequel l'emplacement déterminé du point de commande (1, 20) est une partie de prestataire de services d'un réseau.

7. Point de commande (1, 20) selon l'une quelconque des revendications 1 à 6, dans lequel ledit dispositif connecté (6, 7, 8) est un dispositif plug-and-play universel, UPnP.

8. Procédé réalisé par un dispositif de point de commande (1, 20) pour donner accès à des services et/ou un contenu de données locaux dans un réseau local à partir d'un réseau public (4), comprenant les étapes consistant à :
- dans le dispositif de point de commande (1, 20) pour détecter automatiquement un dispositif connecté (6, 7, 8), découvrir des services et/ou un contenu de données disponibles dans le réseau local, où les services et/ou le contenu de données disponibles découverts sont agencés pour utiliser un protocole commun de communication plug-and-play ;
- présenter des services/un contenu de données disponibles dans un écran graphique accessible à partir du réseau public (4) ;
- authentifier l'accès à l'écran graphique ;
- donner accès aux services/contenu de données disponibles à l'aide du dispositif de point de commande (1, 20) ;
- recevoir, en provenance d'un dispositif utilisateur d'un utilisateur se connectant à partir du réseau public (4), la sélection d'un service et/ou contenu média disponibles à l'aide de l'écran graphique ;
et
- déterminer un format de contenu pour le service et/ou contenu média sélectionné en analysant une configuration du dispositif utilisateur.

9. Programme informatique adapté pour être stocké dans un support lisible par ordinateur (22) en vue d'une exécution sur un point de commande plug-and-play universel, UPnP (1, 20), le point de commande UPnP (1, 20) servant à proposer des services disponibles sur un réseau domestique vers un réseau externe, le programme informatique comprenant des jeux d'instructions pour :
- détecter des dispositifs disponibles supportant les services UPnP sur le réseau domestique ;
- communiquer avec les dispositifs pour obtenir des services disponibles et/ou un contenu de données disponible, où les services disponibles et/ou les données disponibles sont agencés pour utiliser un protocole commun de communication plug-and-play ; et
- produire une interface utilisateur affichant les services et/ou le contenu de données disponibles sur une interface accessible à partir d'un réseau externe ; et
- sur la base d'une configuration d'un dispositif utilisateur se connectant à partir du réseau externe, fournir un format préféré de données à envoyer au dispositif utilisateur depuis le réseau domestique.

10. Programme informatique selon la revendication 9, comprenant en outre un jeu d'instructions pour authentifier l'accès à l'écran de l'interface utilisateur.
